# EUROPÄISCHE PATENTSCHRIFT

(11) **EP 2 216 871 B1**
(45) Veröffentlichungstag und Bekanntmachung des Hinweises auf die Patenterteilung: **02.04.2014**
(21) Anmeldenummer: 10150028.8
(22) Anmeldetag: 04.01.2010
(51) Int. Cl.: H02J 7/00, H01R 13/22, H01R 13/62

(54) **Ladestation**
Charging dock
Station de charge

(30) Priorität: 04.02.2009 DE 102009007359
(43) Veröffentlichungstag der Anmeldung: 11.08.2010
(73) Patentinhaber: Zweibrüder Optoelectronics GmbH & Co. KG, 42699 Solingen (DE)
(72) Erfinder: Opolka, Rainer, 42699, Solingen (DE)
(74) Vertreter: Vomberg, Friedhelm

(56) Entgegenhaltungen:
- DE-A1- 1 936 991
- US-A- 4 092 580
- US-A- 5 489 807
- US-A- 5 867 798
- US-A1- 2007 254 510
- US-A1- 2007 287 302

## Beschreibung

Die vorliegende Erfindung betrifft eine Ladestation mit einer Ladekontakteinrichtung und mit einer akkubetriebenen Taschenlampe.

Eine Ladestation ist beispielsweise aus der DE 297 21 015 U1 bekannt, in der eine Ladestation für aufladbare elektrische Handgeräte offenbart wird. Diese weist eine Halterung für das Handgerät auf, in oder auf die das Handgerät ein- oder aufsteckbar ist, sowie einen Netzgerätstecker, der mittels elektrischer Kontakte elektrisch leitend mit dem in der Halterung angeordneten Handgerät verbunden ist. Das Handgerät soll in verschiedenen Winkelpositionen (entlang der Längsachse) zur Ein- bzw. Aufsteckrichtung an der Halterung festlegbar sein, wobei diesen Positionen elektrische Kontakte zugeordnet sind.

US 2007/0287302 A1 betrifft eine magnetische Kontakteinrichtung für ein akkubetriebenes Handy, wobei als Magnet ein Ringmagnet verwendbar ist.

Eine Ladevorrichtung für Taschenlampen wird in US 4,092,580 beschrieben. Die Taschenlampe und die Haltevorrichtung sind lösbar über eine Klemmvorrichtung miteinander verbunden.

Bei der überwiegenden Anzahl von bekannten Ladestationen muss zum Aufladen der entsprechenden Handgeräte ein Stecker in das Handgerät eingesteckt werden oder umgekehrt. Mit anderen Worten heißt das, dass gängige Ladevorrichtungen stets mindestens einen Stecker und eine dazu korrespondierende Steckdose aufweisen. Nur beispielhaft sei auf derzeit bekannte Ladevorrichtungen von Mobiltelefonen, Notebooks oder Digitalkameras hingewiesen.

Da üblicherweise die Handgeräte eine Öffnung aufweisen, in die ein Stecker eingeführt wird, besteht nachteiliger Weise die Gefahr, dass diese Öffnung mit der Zeit verschmutzt und durch Fremdkörper verstopft wird, so dass das Wiederaufladen des Akkumulators erschwert wird. Darüber hinaus sind die Ladeöffnungen optisch nicht sehr ansprechend.

Ein weiterer Nachteil bekannter Ladevorrichtungen ist insbesondere bei Handgeräten gegeben, die möglichst rasch aus der Ladestation entnommen werden müssen. Beispielsweise Taschenlampen oder dergleichen, die zur Ausrüstung der Polizei oder Feuerwehr gehören, müssen bei Alarm schnell aus der Ladestation entnehmbar sein. Steckverbindungen, wie sie derzeit Verwendung finden, können hierbei leicht beschädigt werden.

Es ist Aufgabe der vorliegenden Erfindung eine Ladevorrichtung zu schaffen, die die oben genannten Nachteile ausräumt. Insbesondere soll eine Ladevorrichtung geschaffen werden, die eine optisch ansprechende Kontaktmöglichkeit an einer Taschenlampe bildet und zudem ein rasches Entfernen der Taschenlampe von der Ladestation ermöglicht.

Diese Aufgabe wird durch die Ladestation nach Anspruch 1 gelöst , wobei erfindungsgemäß die Taschenlampe eine Kontakteinrichtung und zumindest teilweise ein ferromagnetisches Material aufweist und die Ladekontakteinrichtung einen Magneten besitzt, der mit dem ferromagnetischen Material derart in Wirkverbindung bringbar ist, dass die Ladekontakteinrichtung der Ladestation und die Kontakteinreichung der Taschenlampe korrespondierend in Anlage bringbar sind, wobei die Ladestation so an einer Halterung angeordnet ist, dass die Taschenlampe in einer senkrecht angeordneten Halterung von dem Magneten im Ladezustand gehalten wird. Mittels des Magneten werden die entsprechenden und korrespondierenden Kontakte der Ladevorrichtung und der Taschenlampe in Anlage gebracht, wobei die magnetische Kraft für eine dauerhafte, aber leicht lösbare Verbindung sorgt. Somit können die Kontakte an der Taschenlampe an die Oberfläche des Gerätes angepasst werden, was ein optisch einwandfreies Ergebnis liefert. Dadurch, dass das die Taschenlampe und die Ladevorrichtung während des Ladevorgangs nicht mittels einer Steckverbindung verbunden sind, sondern lediglich flächig aufeinander liegen, ist ein rasches Entfernen der Taschenlampe nunmehr möglich. Insbesondere Polizisten und Feuerwehrmännern ist mit der erfindungsgemäßen Ladevorrichtung eine Möglichkeit gegeben, Taschenlampen oder dergleichen derart zu lagern, dass sie auch während des Ladevorganges flink entnommen werden können. Darüber hinaus wird durch die beanspruchte Art der Aufladung ein höherer Wirkungsgrad erzielt als bei bekannten und berührungslos funktionierenden Ladesystemen, bei denen beispielsweise Induktionskontakte verwendet werden.

In den Unteransprüchen sowie im Folgenden werden bevorzugte Ausführungsformen der vorliegenden Erfindung beschrieben.

So ist nach einer vorteilhaften Ausgestaltung vorgesehen, dass die Ladevorrichtung einen ringförmigen Magneten mit einem im Wesentlichen mittig angeordneten Loch aufweist, womit die Zentrierung der Ladekontakte zueinander erleichtert wird. Vorzugsweise besitzt die Ladekontakteinrichtung zwei elektrische Ladekontakte, nämlich einen, der als Ladekontaktring den Magneten umfasst und einen, der als Ladekontaktstift ausgebildet ist und durch das Loch des Magneten geführt ist, wobei beide Ladekontakte aus der Ebene des Magneten hervorstehen. Aufgrund der rotationssymmetrischen Ausbildung der Ladekontakte ist die Taschenlampe in einer Vielzahl von Positionen anbringbar, was die Handhabbarkeit der Vorrichtung verbessert.

Dadurch, dass der Magnet ein mittig angeordnetes Loch aufweist, ergeben sich bezüglich der Positionierung der Taschenlampe weitere Vorteile, denn die Kontakteinrichtung der Taschenlampe besitzt vorteilhafter Weise einen dem Ladekontaktstift korrespondierenden Kontaktstift sowie einen den Kontaktstift umfassenden Kontaktring, wobei vorzugsweise der Kontaktstift aus ferromagnetischem Material und der Kontaktring aus paramagnetischem Material, vorzugsweise aus Aluminium besteht. Werden die beiden Kontakte zusammengeführt, so wird der Kontaktstift von dem Magneten angezogen. Aufgrund der bevorzugten rotationssymmetrischen Ausbildung wird der Kontaktstift automatisch mit dem Ladekontaktstift in Anlage gebracht, wodurch das Einführen der Taschenlampe in den Ladezustand erheblich erleichtert wird.

Nach einer weiteren bevorzugten Ausführungsform ist vorgesehen, dass der Ladekontaktstift aus paramagnetischem Material besteht, wobei an dessen oberem Ende ein ferromagnetischer Teller angeordnet ist, der zumindest teilweise mit dem Magneten in Wirkverbindung ist. Vorteilhafterweise ist zwischen dem den Ladekontaktstift und dem Magneten ein Isolierelement vorgesehen, welches Kurzschlüsse beim Ladevorgang vermeidet. Sofern die Taschenlampe nicht mit der Ladevorrichtung verbunden ist, wird der ferromagnetische Teller von dem Magneten derart angezogen, dass der Teller auf das Isolierelement gedrückt wird. Sobald die Taschenlampe mit der Ladevorrichtung verbunden wird, drückt sich der Ladekontaktstift leicht in den Magneten hinein, so dass der Teller von dem Isolierelement abhebt. Aufgrund der magnetischen Anziehungskraft wird der Ladekontaktstift aber dennoch auf den Kontaktstift der Taschenlampe gedrückt, so dass auch bei geringen Erschütterungen ein ununterbrochener Ladevorgang gewährleistet ist.

Um die Vorrichtung vor Schmutz oder dergleichen zu schützen, sind die Ladekontakte und der Magnet in einem Gehäuse angeordnet.

Bei Taschenlampen ist es üblich, dass endseitig ein Druckknopf angeordnet ist, mit dem die Taschenlampe bedient werden kann. Nach einer besonderen Ausführungsform der vorliegenden Erfindung ist vorgesehen, dass die Kontakteinrichtung in dem Druckknopf angeordnet ist. Insbesondere bezüglich der Lagerung der Taschenlampe ist diese Anordnung vorteilhaft. Des Weiteren ist der Druckknopf in der Regel kugelförmig ausgebildet, was bezüglich der dauerhaften Ausrichtung der Taschenlampe in der Ladevorrichtung vorteilhaft ist. Damit bei der Betätigung des Druckknopfes mit integrierter Kontakteinrichtung kein Kurzschluss entsteht, ist weiterhin vorzugsweise mindestens eine Sperrdiode im Stromkreis der Taschenlampe vorgesehen.

Nach einer bevorzugten Ausführungsform ist die Ladestation an einer Haltung angeordnet, die vorzugsweise an einer Wand oder dergleichen fixierbar ist, so dass die Taschenlampe stets an gleicher Stelle gelagert und aufgeladen werden kann, was in Einsatzzentralen der Feuerwehr und Polizei vorteilhaft ist.

Eine konkrete Ausgestaltung der vorliegenden Erfindung wird im Folgenden anhand der Figuren beschrieben. Dabei zeigen:
- Fig. 1a: eine Ladekontakteinrichtung,
- Fig. 1b: eine Kontakteinrichtung an einer Taschenlampe,
- Fig. 1c: den Ladezustand einer Taschenlampe,
- Fig. 2a: ein konkretes Ausführungsbeispiel einer Ladevorrichtung,
- Fig. 2b: ein konkretes Ausführungsbeispiel einer Halterung und
- Fig. 2c: ein konkretes Ausführungsbeispiel einer Halterung mit Ladevorrichtung und daran angeordneter Taschenlampe.

Die wesentlichen Elemente der erfindungsgemäßen Ladestation betreffen die Kontakteinrichtungen. Die Ladekontakteinrichtung 11 besitzt einen ringförmigen Magneten 12, der ein zentral angeordnetes Loch 13 aufweist. Der Magnet 12 wird von einem Ladekontaktring 14 umfasst, der an der Unterseite eine schräge Fläche 15 aufweist. Durch das Loch 13 ist ein paramagnetischer Ladekontaktstift 16 geführt, der an seinem oberen Ende einen ferromagnetischen Teller 17 besitzt, dessen Radius größer ist als der Radius des Lochs 13 in dem Magneten 12. Zur Vermeidung von Kurzschlüssen sind zwischen den Ladekontakten 14, 16 und dem Magneten 12 Isolierelemente 18 vorgesehen. Selbstverständlich sind die Ladekontakte mit einer Stromquelle 19 verbunden.

Die Kontakteinrichtung 111 an der Taschenlampe 112 ist zu der Ladekontakteinrichtung 11 korrespondierend ausgebildet und weist einen zentral angeordneten Kontaktstift 113 und einen diesen umfassenden Kontaktring 114 auf. Auch bei der Kontakteinrichtung 111 sind zur Vermeidung von Kurzschlüssen, insbesondere zwischen dem Kontaktstift 113 und dem Kontaktring 114, Isolierelemente 115, 116 vorgesehen.

Im dargestellten Ausführungsbeispiel ist die Kontakteinrichtung 111 in einen Druckknopf 117 integriert. Damit bei der Betätigung des Druckknopfes 117 oder beim Lagern außerhalb der Ladevorrichtung kein Kurzschluss über die Kontakte 113, 114 entstehen kann, ist im Stromkreis der Taschenlampe eine Sperrdiode 118 angeordnet.

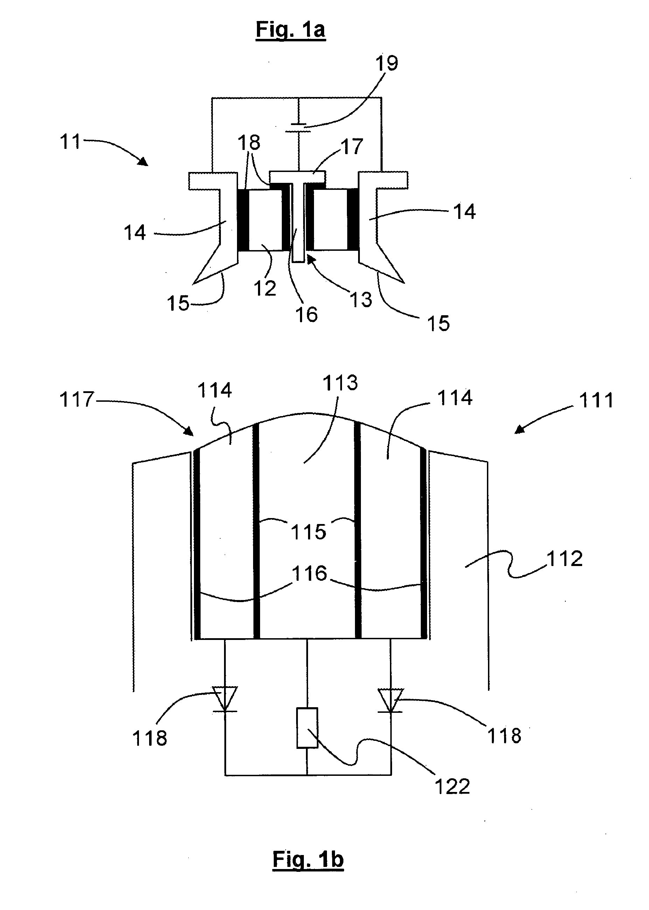

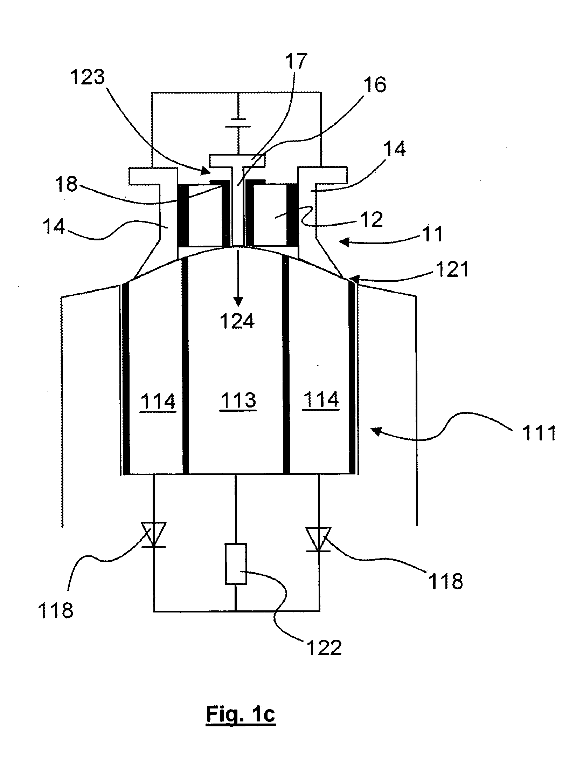

Im Ladezustand (Fig. 1c) ist die Ladekontakteinrichtung 11 und die Kontakteinrichtung 111 in Anlage 121 gebracht, so dass der Akkumulator 122 aufgeladen wird. Es ist deutlich erkennbar, dass der Ladekontaktstift 16 um ein gewisses Maß nach oben verrückt ist, so dass zwischen dem Isolierelement 18 und dem ferromagnetischen Teller 17 der Abstand 123 entsteht. Durch die magnetischen Kräfte des Magneten 12 wird der Ladekontaktstift 16 mit dem ferromagnetischen Teller 17 in Pfeilrichtung 124 auf den Kontaktstift 113 gedrückt, so dass auch bei geringen Erschütterungen der Kontakt nicht unterbrochen wird.

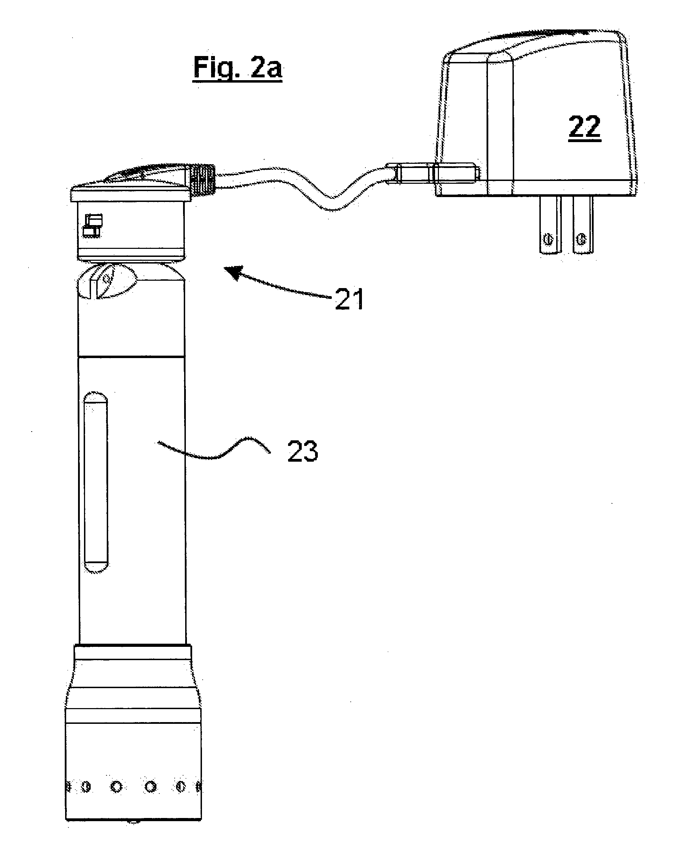

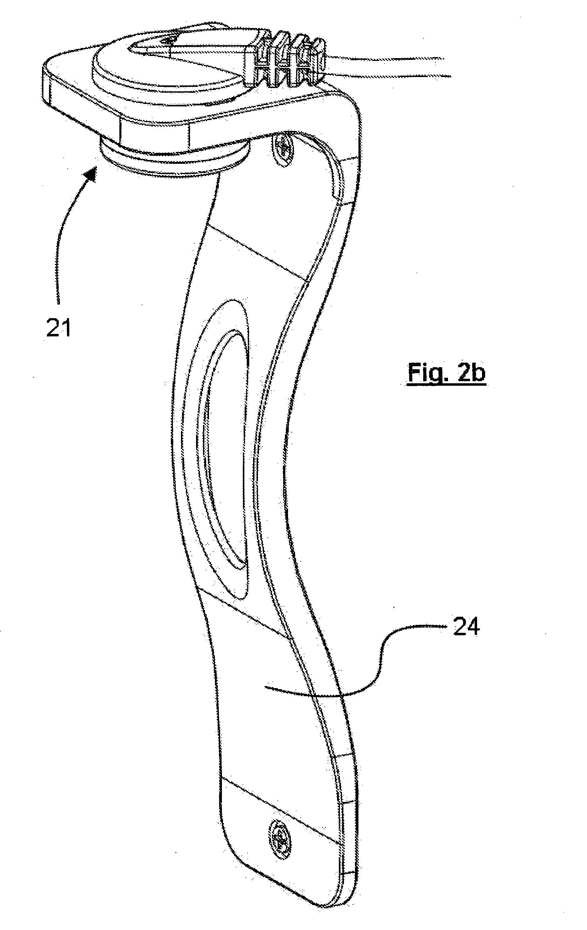

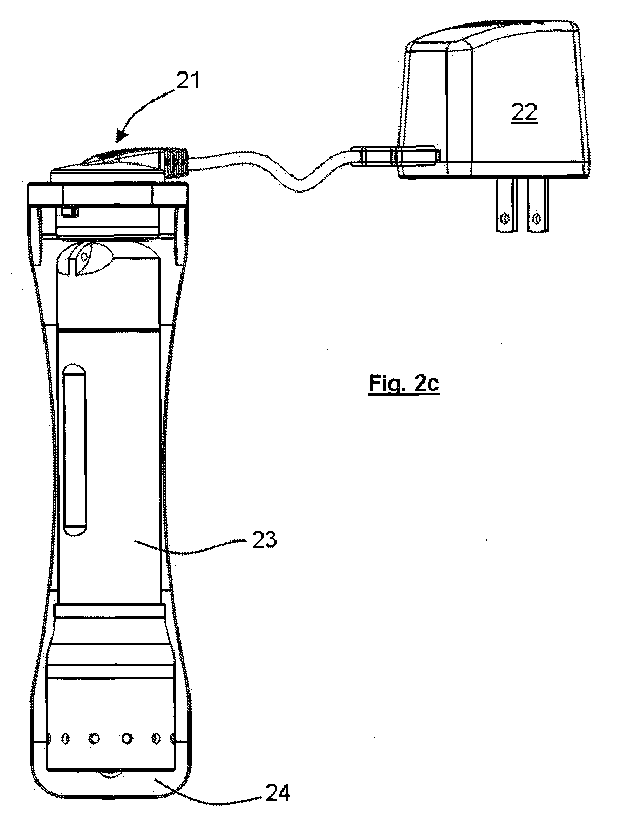

In Fig. 2a ist ein konkretes Ausführungsbeispiel einer Ladestation 21 dargestellt, die mit einem Stromnetzstecker 22 verbunden ist und mit der Kontakteinrichtung einer Taschenlampe 23 verbunden ist. Die Ladestation 21 kann an einer Halterung 24 (Fig. 2b) fixiert sein, die beispielsweise an einer Wand angeschraubt werden kann. Lediglich beispielhaft ist in Fig. 2c eine Taschenlampe 23 dargestellt, die in einer senkrecht angeordneten Halterung 24 im Ladezustand gelagert ist. Insbesondere derartige Halterungen sind als Taschenlampenhalterung bei Feuerwehren oder Polizeistationen aus den oben genannten Gründen vorteilhaft.

## Patentansprüche

1. Ladestation mit einer Ladekontakteinrichtung (11) und mit einer akkubetriebenen Taschenlampe (23),
**dadurch gekennzeichnet, dass**
die Taschenlampe (23) eine Kontakteinrichtung und zumindest teilweise ein ferromagnetisches Material aufweist und die Ladekontakteinrichtung (11) einen Magneten (12) besitzt, der mit dem ferromagnetischen Material derart in Wirkverbindung bringbar ist, dass die Ladekontakteinrichtung (11) der Ladestation (21) und die Kontakteinrichtung (111) der Taschenlampe (23) korrespondierend in Anlage (121) bringbar sind, wobei die Ladestation (21) so an einer Halterung (24) angeordnet ist, dass die Taschenlampe (23) in einer senkrecht angeordneten Halterung (24) von dem Magneten (12) im Ladezustand gehalten wird.

2. Ladestation nach Anspruch 1, **dadurch gekennzeichnet, dass** die Ladestation einen ringförmigen Magneten (12) mit einem im Wesentlichen mittig angeordneten Loch (13) aufweist.

3. Ladestation nach einem der Ansprüche 1 bis 2, **dadurch gekennzeichnet, dass** die Ladekontakteinrichtung (11) zwei elektrische Ladekontakte aufweist, nämlich einen, der als Laderingkontakt (14) den Magneten (12) umfasst und einen, der als Ladekontaktstift (16) ausgebildet ist und durch das Loch (13) des Magneten (14) geführt ist, wobei beide Ladekontakte aus der Ebene des Magneten (12) hervorstehen.

4. Ladestation nach einem der Ansprüche 1 bis 3, **dadurch gekennzeichnet, dass** der Ladekontaktstift (16) aus paramagnetischem Material besteht, wobei an dem oberen Ende des Ladekontaktstiftes (16) ein ferromagnetischer Teller (17) angeordnet ist, der zumindest teilweise mit dem Magneten (12) in Wirkverbindung ist.

5. Ladestation nach einem der Ansprüche 1 bis 4, **dadurch gekennzeichnet, dass** die Ladekontakte und der Magnet (12) in einem Gehäuse angeordnet sind.

6. Ladestation nach einem der Ansprüche 1 bis 5, **dadurch gekennzeichnet, dass** die Kontakteinrichtung (111) der Taschenlampe (23) einen dem Ladekontaktstift (16) korrespondierenden Kontaktstift (113) sowie einen den Kontaktstift (113) umfassenden Kontaktring (114) aufweist, wobei zwischen dem Kontaktstift (113) und dem Kontaktring (114) ein isolierendes Material (115) angeordnet ist.

7. Ladestation nach einem der Ansprüche 1 bis 6, **dadurch gekennzeichnet, dass** der Kontaktstift (113) auf ferromagnetischem Material und der Kontaktring (114) aus paramagnetischem Material, vorzugsweise aus Aluminium, besteht.

8. Ladestation nach einem der Ansprüche 1 bis 7, **dadurch gekennzeichnet, dass** die Kontakteinrichtung (111) in einem Druckknopf (117) angeordnet ist, mit dem die Taschenlampe (23, 112) betreibbar ist.

9. Ladestation nach einem der Ansprüche 1 bis 8, **dadurch gekennzeichnet, dass** die Ladestation an einer Halterung (24) angeordnet ist, die vorzugsweise an einer Wand oder dergleichen fixierbar ist, so dass die Taschenlampe (23, 112) stets an gleicher Stelle gelagert und aufgeladen wird.

10. Ladestation nach einem der Ansprüche 1 bis 9, **dadurch gekennzeichnet, dass** in dem Stromkreis der Taschenlampe (23, 112) eine Sperrdiode (118) angeordnet ist.

## Claims

1. Charging dock having a charging contact device (11) and having a rechargeable battery-operated torch (23), **characterized in that** the torch (23) has a contact device and, at least in part, comprises a ferromagnetic material, and the charging contact device (11) has a magnet (12) which can be brought into operative connection with the ferromagnetic material in such a way that the charging contact device (11) of the charging dock (21) and the contact device (111) of the torch (23) can be brought into abutment (121) in a corresponding manner, wherein the charging dock (21) is arranged on a holding means (24) such that the torch (23) is held in a perpendicularly arranged holding means (24) by the magnet (12) in the charging state.

2. Charging dock according to Claim 1, **characterized in that** the charging dock has an annular magnet (12) with a hole (13) which is arranged substantially in the centre.

3. Charging dock according to either of Claims 1 and 2, **characterized in that** the charging contact device (11) has two electrical charging contacts, specifically one which surrounds the magnet (12) in the form of a charging ring contact (14), and one which is in the form of a charging contact pin (16) and is routed through the hole (13) in the magnet (14), wherein the two charging contacts project out of the plane of the magnet (12).

4. Charging dock according to one of Claims 1 to 3, **characterized in that** the charging contact pin (16) is composed of paramagnetic material, wherein a ferromagnetic plate (17) is arranged at the upper end of the charging contact pin (16), the said ferromagnetic plate being at least partially operatively connected to the magnet (12).

5. Charging dock according to one of Claims 1 to 4, **characterized in that** the charging contacts and the magnet (12) are arranged in a housing.

6. Charging dock according to one of Claims 1 to 5, **characterized in that** the contact device (11) of the torch (23) has a contact pin (113) which corresponds to the charging contact pin (16), and also a contact ring (114) which surrounds the contact pin (113), wherein an insulating material (115) is arranged between the contact pin (113) and the contact ring (114).

7. Charging dock according to one of Claims 1 to 6, **characterized in that** the contact pin (113) is composed of ferromagnetic material, and the contact ring (114) is composed of paramagnetic material, preferably of aluminium.

8. Charging dock according to one of Claims 1 to 7, **characterized in that** the contact device (111) is arranged in a pushbutton (117) with which the torch (23, 112) can be operated.

9. Charging dock according to one of Claims 1 to 8, **characterized in that** the charging dock is arranged on a holding means (24) which preferably can be fixed to a wall or the like, so that the torch (23, 112) is always mounted at the same location and charged.

10. Charging dock according to one of Claims 1 to 9, **characterized in that** a blocking diode (118) is arranged in the electrical circuit of the torch (23, 112).

## Revendications

1. Poste de charge comprenant un dispositif de contact de charge (11) et une lampe de poche (23) fonctionnant sur batteries,
**caractérisé par le fait que**
ladite lampe de poche (23) présente un dispositif de contact et au moins en partie un matériau ferromagnétique et que ledit dispositif de contact de charge (11) possède un aimant (12) qui peut être mis en liaison active avec le matériau ferromagnétique de telle sorte que le dispositif de contact de charge (11) du poste de charge (21) et le dispositif de contact (111) de la lampe de poche (23) peuvent être mis en appui (121) de manière correspondante, ledit poste de charge (21) étant disposé sur un support (24) de telle manière que la lampe de poche (23) est maintenue en état de charge par ledit aimant (12) dans un support (24) disposé verticalement.

2. Poste de charge selon la revendication 1, **caractérisé par le fait que** ledit poste de charge présente un aimant annulaire (12) ayant un trou (13) agencé pour l'essentiel au centre.

3. Poste de charge selon l'une quelconque des revendications 1 à 2, **caractérisé par le fait que** ledit dispositif de contact de charge (11) comprend deux contacts de charge électriques, à savoir un qui, en tant que contact annulaire de charge (14), entoure ledit aimant (12) et un qui est réalisé comme broche de contact de charge (16) et est mené à travers le trou (13) de l'aimant (14), les deux contacts de charge faisant saillie du plan de l'aimant (12).

4. Poste de charge selon l'une quelconque des revendications 1 à 3, **caractérisé par le fait que** ladite broche de contact de charge (16) est réalisée dans un matériau paramagnétique, à l'extrémité supérieure de la broche de contact de charge (16) étant disposée une rondelle ferromagnétique (17) qui est en liaison active, au moins en partie, avec ledit aimant (12).

5. Poste de charge selon l'une quelconque des revendications 1 à 4, **caractérisé par le fait que** les contacts de charge et ledit aimant (12) sont disposés dans un boîtier.

6. Poste de charge selon l'une quelconque des revendications 1 à 5, **caractérisé par le fait que** ledit dispositif de contact (111) de la lampe de poche (23) comprend une broche de contact (113) correspondant à la broche de contact de charge (16) ainsi qu'une bague de contact (114) entourant ladite broche de contact (113), entre ladite broche de contact (113) et ladite bague de contact (114) étant disposée une matière isolante (115).

7. Poste de charge selon l'une quelconque des revendications 1 à 6, **caractérisé par le fait que** ladite broche de contact (113) est réalisée dans un matériau ferromagnétique et ladite bague de contact (114) est réalisée dans un matériau paramagnétique, de préférence en aluminium.

8. Poste de charge selon l'une quelconque des revendications 1 à 7, **caractérisé par le fait que** ledit dispositif de contact (111) est disposé dans un bouton-poussoir (117) par le biais duquel la lampe de poche (23, 112) peut être actionnée.

9. Poste de charge selon l'une quelconque des revendications 1 à 8, **caractérisé par le fait que** le poste de charge est disposé sur un support (24) qui, de préférence, peut être fixé sur un mur ou similaire de sorte que la lampe de poche (23, 112) est stockée et rechargée toujours au même endroit.

10. Poste de charge selon l'une quelconque des revendications 1 à 9, **caractérisé par le fait qu'**une diode de blocage (118) est montée dans le circuit de la lampe de poche (23, 112).
